# EUROPEAN PATENT SPECIFICATION

(11) **EP 1 689 198 B1**
(45) Date of publication and mention of the grant of the patent: **09.12.2009**
(21) Application number: 05002258.1
(22) Date of filing: 03.02.2005
(51) Int. Cl.: H04Q 1/14, H05K 7/14

(54) **Functional module and assembly of at least one telecommunications module and at least one functional module**
Funktionsmodul und Anordnung mindestens ein Telekommunikationsmodul und mindestens ein Funktionsmodul umfassend
Module fonctionnel et ensemble comprenant au moins un module de télécommunication et un module fonctionnel

(43) Date of publication of application: 09.08.2006
(73) Proprietor: 3M Innovative Properties Company, St. Paul MN 55133-3427 (US)
(72) Inventor: Denter, Friedrich Wilhelm, 44575 Castrop-Rauxel (DE); Koruschowitz, Axel, 42781 Haan (DE); Bund, Christine Brigitte, 42111 Wuppertal (DE); Edelmann, Wolfgang, 42111 Wuppertal (DE)
(74) Representative: Bergen, Katja

(56) References cited:
- EP-A- 1 455 417
- WO-A-03/061303
- FR-A- 2 616 034
- US-A- 6 166 894
- US-A1- 2002 176 231

## Description

### Technical Field

The invention relates to a functional module in the field of telecommunications and an assembly of at least one telecommunications module and at least one functional module.

### Background

In the field of telecommunications, numerous customers are connected with the switch of a telecommunications company via telecommunications lines. The customers can also be called subscribers. The switch is also called an exchange or PBX (central office exchange operated by the telecommunications company). Between the subscriber and the switch, sections of the telecommunications lines are connected with telecommunications modules. The telecommunications modules establish an electrical connection between a wire which is attached to the telecommunications module at a first side, and another wire which is attached to the telecommunications module at a second side. The wires of one side can also be called incoming wires and the wires of the other side can be called outgoing wires. Plural telecommunications modules can be put together at a distribution point, such as a main distribution frame, an intermediate distribution frame, an outside cabinet or a distribution point located, for example, in an office building or on a particular floor of an office building. To allow flexible wiring, some telecommunications lines are connected with first telecommunications modules in a manner to constitute a permanent connection. Flexibility is realized by so-called jumpers or cross connects, which flexibly connect contacts of the first telecommunications module with contacts of a second telecommunications module. These jumpers can be changed when a person moves within an office building to provide a different telephone (i.e. a different telephone line) with a certain telephone number, which the relocated person intends to keep. In the telecommunications module, disconnection points can be located in the electrical connection between the two sides. At such disconnection points, disconnection plugs can be inserted, in order to disconnect the line. Furthermore, protection plugs and magazines are known. These are connected to the module and protect any equipment connected to the wires from overcurrent and overvoltage. Finally, test plugs can be inserted at a disconnection point in order to test or monitor a line.

Recently, ADSL-technology has spread widely in the field of telecommunications. This technology allows at least two different signals to be transmitted on a single line. This is achieved by transmitting the different signals at different frequencies along the same line. The signals are combined at a particular point in the telecommunications line and split at another point. In particular, at the subscriber side, voice and data signals, which are separate, are combined and sent to the central office via the same line.
In the central office the combined signal is split. For the transmission of voice and data signals to the subscriber, separate voice and data signals are combined at the central office, sent to the subscriber and split at the subscriber side. After splitting the signal, the so-called POTS-signal (plain old telephone service) can be used to transmit voice signals. The remaining part of the split signal can be used to transmit data, for example. So-called splitters, which are used to split or combine the signal, can generally be arranged at any distribution point.

Any electronic components, which are necessary to perform the above functions, can be contained, possibly together with a printed circuit board as a base, in a functional module, which can be called a splitter module. Similar functional modules are protection modules, which contain any components which provide protection against overvoltage and/or overcurrent, as well as testing and monitoring modules, which contain suitable electronic components and circuits in order to test and/or monitor a telecommunications line. Furthermore, other functional modules in the above sense are known to those skilled in the art.

The Applicant's EP 1 455 417 A1 describes a functional module in the field of telecommunications, which is fittable into a contact module.

DE 33 23 821 A1 discloses an insertable member for installations in the field of telecommunications which comprises, at the inner side of a frame-type structure, coding pins.

DE 297 22 576 U1 discloses a terminal module in the field of telecommunications comprising a printed circuit board and sockets, which can be mounted to the printed circuit board at an edge thereof. In the mounting area, the printed circuit board comprises both the contacts, which are to be connected with the sockets, and contours and holes, which allow the sockets to be mounted and fixed by latching.

FR 2 616 034 A discloses a functional module in the field of telecommunications, which is fittable to a telecommunications module and comprises outer edges, corners and an accessible contact area. Recesses are formed on two outer edges at a distance from a corner.

### Summary of the Invention

The invention provides a functional module in the field of telecommunications, which is improved with regard to its fitting to a telecommunications module and/or with regard to the reliability in performing the desired functions.

The functional module in the field of telecommunications as described herein is fittable to a telecommunications module. In other words, the functional module can be brought into a positional relationship with respect to a telecommunications module, in which at least some of the contacts of both modules are connected with each other. Furthermore, there can be suitable portions on either module, which provide a mechanical connection or attachment between the modules. In particular, the functional module can be insertable into a telecommunications module. In such a case, the telecommunications module comprises a cavity or space, which is adapted to accommodate the functional module. Such an insertion of the functional module into the telecommunications module can be provided from any direction, i.e. from a front side of the telecommunications module, where contacts for connecting outside wires are exposed, as well as from a top, bottom, rear or one of the lateral sides.

In this context, reference can be made to the Applicant's above-mentioned EP 1 455 417 A1 as well as the Applicant's EP 05 000 345.8 filed on January 10, 2005, which describe functional modules, to which the improvement described herein can be applied. In particular, the disclosure of EP 1 455 417 A1, as far as the general features of the functional module, such as its components, the functions performed thereby, the contacts for making connections with the contacts of a telecommunications module, are concerned, is incorporated herein by the reference. This also applies to the disclosure of the above-mentioned, recently filed application. In particular, the functional module described herein can also have the flexible handle described in above-mentioned Applicant's EP 05 000 345.8. As this flexible handle projects from the outer edge of the functional module, it could be considered a projection. However, this projection is not rigid and will, therefore, not be suitable for performing the functions described below for the specific features provided by the invention. The telecommunications module, to which the functional module is fittable, can also be called a contact module as this may contain only the contacts for connecting incoming and outgoing wires therewith. Any functions, such as those described in more detail below, can be realized in the functional module.

The novel functional module comprises outer edges and corners. In particular, the outer edges and corners can be formed on a rigid carrier of the functional module, which can be constituted by a printed circuit board. Thus, when the functional module is viewed in a direction substantially perpendicular to the surface of the printed circuit board, the printed circuit board can define the outer contour including the outer edges and corners of the functional module and, therefore, any of the structures mentioned below, which are formed on the outer edges. Moreover, the functional module can have a generally plate-like structure with a certain thickness. In this case, the outer edges are those strip-like surface portions, which extend in the thickness direction, i.e. substantially perpendicular to the main surface of the plate-like functional module.

Moreover, the functional module comprises an accessible contact area having contacts, which are adapted to make electrical contact with contacts of a telecommunications module, when the functional module is fitted to the telecommunications module. The functional module also comprises at least one rigid step, projection and/or recess formed on at least one outer edge in an area other than the contact area and at a distance from a corner. In this context, projections and recesses mean any contours, which are visible, when the functional module is viewed in a direction substantially perpendicular to its main surface and which deviate from the "normal" edge. In this context, a projection means a contour formed on an outer edge of the functional module, which implies a deviation from the remainder of the outer edge, so that the width of the functional module, measured from edge to edge, increases. In contrast, a recess implies material being taken away or cut out from the outer edge. Accordingly, the width decreases, when a recess is formed. A step being formed in the thickness direction means that there is a change in the thickness. In the case of a relatively thin functional module, for example being constituted by a printed circuit board, a step means a configuration, in which there is at least a certain section, which at least partially extends in the thickness direction so that, when viewed parallel to the main surface, a step can be seen.

Generally, the step, projection and/or recess can be formed integrally on a component of the functional module. For example, the step, projection and/or recess can be formed on a housing of the functional module or a rigid carrier thereof. In particular, the mentioned structures can be formed on a printed circuit board of the functional module. Moreover, the step, projection and/or recess can at least be partially formed on a separate component or a piece of material, which is fitted to the functional module. In any case, the projection and/or recess form or constitute the outer edge of the functional module at the location, where they are present. In other words, there are no further, possibly flexible or pivotable members, such as a release handle mentioned above, attached to the projection or recess. In this manner, the contour of the projection or recess, constituting the outer edge of the functional module without any interfering components, will be advantageously usable for positioning the functional module and/or providing a coding function.

For example, if these contours are formed on a printed circuit board of the functional module, the projections and/or recesses are visible with the described viewing direction on at least one outer edge of the functional module. A step means a structure, which is formed in a thickness direction of the functional module. As mentioned above, the functional module will usually have a plate-like structure with the thickness direction being the smallest dimension of this structure.

All of the above described structures, i.e. a step and/or a projection and/or a recess, firstly, serve the purpose of providing an improved fit to the telecommunications module. In particular, the steps, projections and/or recesses allow, at least in some areas thereof, complementary structures to be formed in the telecommunications module. In this manner, these at least partially complementary structures cooperate with each other in order to define the position of the functional module and/or provide mechanical support. In particular, as will be detailed below, these structures can also be configured to provide a kind of feedback to the effect that the functional module has reached a desired position, which can be felt, when the functional module is fitted to, particularly inserted into a telecommunications module. This feedback can, for example, be achieved by a projection formed on the telecommunications module coming into engagement with a recess formed on the outer edge of the functional module.

Secondly, the described structures in the form of one or more steps, projections and/or recesses also provide a type of coding and/or identification, when the functional module is fitted to the telecommunications module. In particular, it can be ensured by providing at least partially complementary and interacting structures that only certain functional modules, which are suitable for being fitted to a certain telecommunications module, can actually be fitted thereto. Any other functional modules, which are not suitable for this purpose, are prevented from being brought into the desired position on the telecommunications module. Thus, it can advantageously be achieved that only those modules, which are suitable for being combined with each other, can actually be fitted to each other. Thus, malfunctions can be minimized.

The provision of the step, projection and/or recess in an area other than the contact area leads to the advantage that areas or parts of the functional module, which serve different purposes, can be separated from each other to some extent. In particular, the contact area is essentially reserved for providing the contacts, so that this area can be designed in line with this particular function. The area, where the step, projection and/or recess are formed, is located somewhat remote from the contact area and can thus be contoured in any suitable manner without having to take into account any specific requirements regarding the contacts, which have to be formed. It has, furthermore, been found that the formation of a step, rejection and/or recess at a distance from a corner provides enhanced reliability for the effect of these contours.

Whereas the functional module described herein can have projections and/or recesses in any combination, it has been found to provide advantages, when both at least one projection and at least one recess are formed on at least one outer edge. Thus, enhanced mechanical positioning and coding functions can be provided.

The functional module can have any suitable shape. In particular, the functional module can have a substantially rectangular shape, with the contact area being provided along an edge thereof. It is currently preferred to form any projections or recesses on outer edges which are oriented at an angle of substantially 90° relative to an edge, on which the contact area is provided. In this context, it can be mentioned that the functional module can be insertable into a telecommunications module in a direction, which is substantially parallel to that edge, where the contact area is provided. Thus, in the above described embodiment, those edges, where projections and/or recesses are formed, are oriented substantially perpendicular to the insertion direction. Thus, projections can for example be inserted into recesses formed in the telecommunications module and/or in a second functional module, as described in more detail below, so that the desired mechanical positioning and coding can be achieved.

In particular, it provides advantages if two opposite outer edges are at least partially formed complementary to each other. In other words, a first, for example left edge of the functional module is complementary, in other words, the negative of the right edge. This means that two functional modules can be combined with each other by fitting for example the left edge of a right functional module to the right edge of a left functional module. Thus, one and the same type of functional module can be used both as a left and right functional module. In particular, a telecommunications module can be adapted to accommodate two functional modules, so that these can, due to their complementary edges, be used as either right or left functional module. In the area, where they are adjacent each other, the projections and/or recesses can be accommodated in the complementary contours of the "other" functional module in a space saving manner. This, moreover, ensures that only those types of functional modules, which can actually be combined with each other, can be fitted into the telecommunications module at the same time. In particular, the functional module comprising complementary, opposite outer edges, can be called asymmetrical.

The mechanical positioning as well as the coding function can be further improved, if the projections and/or recesses are formed with a varying projecting/recessed dimension. In other words, there is at least one step or change in dimension formed along the projecting/recessed dimension, so as to provide for additional support structures and/or coding portions.

As mentioned above, the functional module including a step, a projection and/or recess can be positioned in a defined manner at a telecommunications module. This can be further improved by providing at least one undercut at at least one outer edge of the functional module, which serves as a stop. In other words, the functional module can be inserted into a telecommunications module until the stop abuts a counter portion at the telecommunications module, so that a well defined position can reliably be reached.

Most of the above explanation was related to projections and/or recesses being formed at the outer edges of the functional module, i.e. they are visible, when the functional module is viewed parallel to a thickness direction thereof. Corresponding advantages can, however, be achieved, when at least one step, projection and/or recess is formed in at least one outer edge in the thickness direction. Thus, the step, projection and/or recess will be visible, when the functional module is viewed in a direction perpendicular to the thickness direction. Also with this structure, the above described functions can be obtained.

Both in order to allow an efficient mounting of any electronic components, which provide the desired functions of the functional module, and in order to efficiently allow the formation of the described structures, it has been found advantageous to provide the functional module with at least one printed circuit board. In particular, the printed circuit board can act as a kind of rigid carrier, on which both the electronic components are mounted, and the steps, projections and/or recesses are formed. In particular, the outer edges of the functional module, when this is viewed in a direction perpendicular to the main surface of the printed circuit board, can be defined by the printed circuit board.

With regard to the functions, which are to be performed by the functional module described herein, the functional module can comprise at least one splitter circuit, at least one protection component, such as an overvoltage and/or overcurrent protector, and/or at least one testing or monitoring circuit. Furthermore, the functional module can comprise at least one connector. Particularly, the functional module can be intended for the transmission of a pure data signal. For this purpose, in order to be compatible with well-established telecommunications modules, any connections, such as connectors printed on a printed circuit board can be formed as to connect the contacts of the telecommunications module with each other in a suitable manner without placing any electronic components between them. The manufacture and operation of functional modules is well known in the telecommunications field and need not to be described in any greater detail herein.

Further advantages are obtained, when the more than one contacts of the functional module have a width, which extends substantially in an insertion direction of the functional module, wherein at least two contacts have a differing width. Already at this point, it should be mentioned that this constitutes an improvement, which is independent from all of the above-mentioned features and can, however, be combined therewith. Thus, a functional module having the specific contacts described hereinafter does not necessarily need to have the step, projection or recess. The provision of differing width provides the following advantages.
Typically, the contacts of the functional module will be printed on a printed circuit board or will in any other suitable manner be formed on the functional module and will, for example due to the printing, have a certain thickness which creates a step extending in the thickness direction.

When the functional module is inserted, the contacts of the telecommunications module have to "ride over" these steps.
In particular, the contacts of the telecommunications module are usually biased with a certain force in the direction of the telecommunications module and the contacts thereof.
Thus, this pretension also has to be taken into account, when the force is considered, which it will take to cause the contacts of the telecommunications module to "ride over" the described steps. It has been found that it can require a relatively high force, if all of the plural steps, which are related to plural contacts, have to be "overridden" by the contacts at one and the same time. When the contacts have a differing width, i.e. when at least one, preferably more than one contact are overridden at a differing point in time, the insertion action will be facilitated.

This advantage is also obtained, if distances between adjacent contacts are different from each other. In this embodiment, the contacts do not necessarily have to have a differing width. Rather, their position is slightly spaced with at least partially irregular spacings, so that the above described advantage can be obtained. When the width of the contacts differs, as described above, their center lines can have an identical distance. Moreover, differing width and different distances can be combined with each other.
Finally, it can provide the very same advantage, when the edge of the contact, which extends perpendicular to an insertion direction, is slightly angled with regard to the direction perpendicular to the insertion direction, so that a kind of "ramp" facilitating the insertion is created. As mentioned before, the described structures of contacts are to be seen as independent improvement from all of the features above and below and can, however, be combined therewith. The gist of this improvement is to be seen in the effect that at least some of the contacts of the telecommunications module have to "ride over" the edges of the contacts of the functional module at different times. In particular, the deviation with regard to the width can be approximately 25%. Thus, the width of wider contacts can for example be 2.0 mm to 2.1 mm, and the width of the narrower contacts can be approximately 1.5 mm to 1.6 mm. The length of the contacts, i.e. the extension in a direction perpendicular to the insertion direction, can for example be 4.6 mm. When at least one distance between contacts is different from the other distances, also a deviation of approximately 25% can be chosen. Moreover, when at least one contact comprises at least one edge, which is angled with regard to the direction perpendicular to the insertion direction, this angle, measured from the direction perpendicular to the insertion direction, can be about 5° to 15°, and particularly approximately 10°. It can finally be mentioned with regard to the above described improvement that the width of the contact zone including all contacts, which are present, can approximately correspond to the total width of the module.

As described above, the invention provides significant advantages for a functional module, in particular with regard to the positioning and identification thereof. These advantages can particularly be obtained, if at least one functional module is combined with at least one telecommunications module so as to constitute an assembly of at least one functional module and at least one telecommunications module. The telecommunications module can also be called and formed as a contact module as it comprises those contacts which allow the connection of incoming and outgoing wires therewith. By the combination of at least one telecommunications module and at least one functional module the wires can be connected in a suitable manner, and any function, as detailed above, can be performed by employing a functional module transmitting and possibly processing the signal.

Generally, the telecommunications module can have any suitable structure to allow the functional module to be fitted thereto. In particular, the telecommunications module can have at least one inner cavity formed therein, into which the functional module is insertable. This cavity can for example be accessible from any side thereof, when the area, where the contacts of the telecommunications module are exposed, is considered a front.

It particularly provides advantages for positioning the at least one functional module, when the telecommunications module comprises at least one stop. Thus, it is reliably prevented that the functional module is inserted or pushed into the telecommunications module too far.

In this case, an advantageous outer appearance of the assembly can be achieved, when the stop is adapted to position the functional module such that at least one outer edge thereof is at least flush with the outer edge of the telecommunications module. Thus, although the functional module can comprise various projections, these are arranged at least flush, preferably inside the outer edges of the telecommunications module, so that interference with surrounding modules and/or wires or cables can be prevented.

Generally, as mentioned above, the steps, projections and/or recesses formed on the functional module can cooperate with at least partially complementary structures formed on the telecommunications module so as to provide the above effects. However, particularly when two functional modules can be fitted to a telecommunications module, one from a first and the other one from a second, opposite side, it provides advantages, when the width of the functional module including any rigid projections formed thereon is greater than half of the width of the telecommunications module. Thus, when a first functional module is fitted to the telecommunications module so as to be flush with the outer edge of the telecommunications module, at least a part, for example a projection thereof, will extend into the area, where the second functional module is to be accommodated. This part essentially provides a projection, with which a suitable contour, for example a recess, of the second functional module, has to cooperate. In particular, only when a suitable recess is present in the second functional module, the second functional module can be brought into the appropriate position. In other words, when it is attempted to fit a second functional module, which lacks the necessary recess, to the telecommunications module, there is provided a reliable feedback, that this particular functional module "will not fit". Thus, malfunctions due to the use of unsuitable functional modules can be minimized.

Finally, at least one projection can be formed on the telecommunications module, which is adapted to cooperate with a recess formed on an outer edge of the functional module.
In particular, this recess can be formed on an edge, which extends substantially parallel to the insertion direction. Thus, the outer edge will move along the projection, when the functional module is inserted, until the projection reaches the recess and can be accommodated therein. This coming into engagement will be felt by the person handling the functional module, so that feedback is provided to the effect that the functional module has reached the desired position. Furthermore, the combination of projection and recess can be provided in a manner to generate a certain sound, such as a "click"-sound, so that the message that the functional module has reached the desired position, is also conveyed in this manner. Naturally, the same effects are obtained, if the projection is formed on the functional module, and the recess is formed on the telecommunications module.

The telecommunications module can, moreover, comprise more than one contact, with a width extending in an insertion direction, wherein at least two contacts have a differing width. This structure of the contacts of the telecommunications module provides the same advantages as the corresponding structure of the functional module, which was described above. Thus, if the widths of the contacts of the functional module are identical to each other, the insertion action can also be improved, when the contacts of the telecommunications module are formed as described above.

The same advantages are obtained, if the telecommunications module has more than two contacts with distances between the contacts extending substantially in the insertion direction of the functional module, and at least two distances being different from each other. Also these features of the telecommunications module are to be seen independent from any other features of the telecommunications and the functional module described above or below. However, also these features can be combined with each other.

### Brief Description of the Drawings

Hereinafter, the invention will be described by several nonlimiting examples thereof with reference to the drawings, in which:
- Fig. 1a: shows a first embodiment of the functional module in a perspective view.
- Fig. 1b: shows an alternative regarding the contact area of the functional module shown in Fig. 1a.
- Fig. 2: shows a plan view of two functional modules in a second embodiment being fitted to a telecommunications module.
- Fig. 3: shows a third embodiment of the functional module in a perspective view.

- Fig. 4: shows a side view of an assembly of a telecommunications module and the functional module of Fig. 3.
- Fig. 5: shows a schematic plan view of two functional modules in a fourth embodiment.

### Description of referred embodiments of the invention

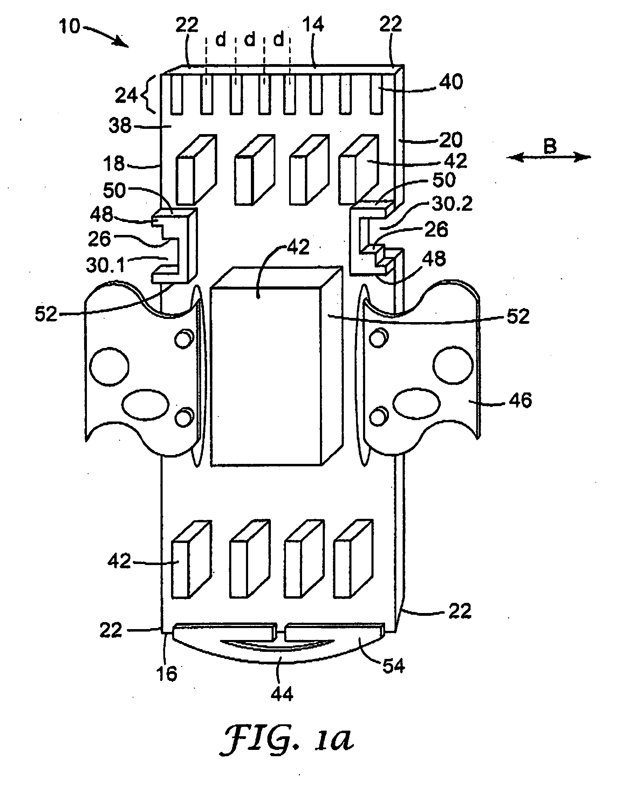

As can be taken from Fig. 1a, the functional module 10 shown in the figure comprises a printed circuit board 38 as a type of carrier. In particular, electronic components 42, can be mounted to the printed circuit board 38. Furthermore, printed conductors (not shown) can be present on the printed circuit board 38, in particular on either side thereof in order to connect the electronic components 42 with each other as well as with contacts 40. The contacts 40 are formed, in the embodiment shown, adjacent an edge 14 of the printed circuit board 38. The area 24 along the edge 14, where the contacts 40 are formed, is called a contact area 24. In particular, the contacts 40 are adapted to contact and, therefore, be connected with contacts of a telecommunications module (not shown in Fig. 1a). The contacts 40 can be formed as contact pads, which are, for example, printed on the printed circuit board 38. As regards these contacts 40, the exemplary embodiment shown comprises contacts, of which the center lines have a constant distance d from each other. However, the width of the contacts 40 extending in the insertion direction B, are different from each other. Thus, with contacts of the telecommunications module having all the same width and distances between them, at least some of the contacts of the telecommunications module have to get over the edges of the contacts 40 of the functional module at differing times, so that the insertion action can be facilitated. As regards the dimensions of the contacts 40, reference can be made to the dimensions mentioned above. Moreover, the specific shape of the contacts 40 shown in Fig. 1 is applicable to all embodiments described below and vice versa.

The embodiment shown, furthermore, comprises a grounding element 54, which is attached to the printed circuit board 38 in any suitable manner. Furthermore, the grounding element 54 is connected with printed conductors (not shown), which serve to connect appropriate contacts of the electronic components 42 with the grounding element 54. Particularly if the electronic components 42 comprise overvoltage protectors, their ground contacts can be connected with the grounding element 54, in order to allow any overvoltage to be grounded. In the case shown, the grounding element 54 comprises a curved section 44 which provides resiliency and serves to reliably contact a portion of a metal carrier or rack in the field of telecommunications (not shown), in order to provide a reliable connection to ground.

The embodiment shown comprises a rectangular printed circuit board 38, which is not covered by any housing or cover. It should, however, be noted that such a cover or housing can be present in order to protect the functional module 10, in particular the electronic components 42 provided thereon. In the case shown, the functional module 10 is insertable into a telecommunications module (not shown) by being moved in the direction of arrow B. This insertion can be effected by applying pressure to the edge of the printed circuit board 38 on either the left 18 or right edge 20 thereof.

In the embodiment shown, the functional module 10 comprises a flexible handle in the form of a tape 46 on both sides. In this respect, particularly the details, embodiments and effects of this flexible handle, reference can be made to the Applicant's EP 05 000 345.8 filed January 10, 2005. In particular, the functional module described herein can comprise the flexible handle in any embodiment disclosed in the referenced application.

In the exemplary embodiment shown, both the left 18 and the right edge 20 of the printed circuit board 38 is formed with a recess 30. In particular, the material of the printed circuit board 38 is appropriately cut out, molded, removed, or otherwise shaped in order to provide a recess 30 with a varying recessed dimension, i.e. a varying depth in the direction B. In this manner, a type of step 26 is formed in each recess 30. Moreover, the left recess 30.1 has a greater depth in a rear part thereof, whereas the right recess 30.2 has a greater depth in a front part thereof, i.e. closer to the front edge 14. In the embodiment shown, both the sides of the recesses 30 and the step 26 extend approximately perpendicular to the respective edge 18, 20.

In the embodiment shown, the described recesses 30 are not only formed on the printed circuit board 38, but also on an additional piece 48 which is mounted to the printed circuit board 38 at the location of each recess 30. By providing the pieces 48, the functional module 10 has, in the embodiment shown and in the surroundings of the recess 30, an increased thickness, i.e. an increased dimension in a direction perpendicular to the main surface of the printed circuit board 38, so that further steps are formed at the front 50 and rear end 52 of each piece 48. These steps are in the case shown oriented approximately perpendicular to the plane of the printed circuit board 38. Thus, the recesses 30 alone provide a kind of two-dimensional coding, i.e. merely in the plane of the printed circuit board 38. By providing the additional pieces 48, a three-dimensional coding is achieved, as steps are additionally formed perpendicular to the plane of the printed circuit board 38. It should, however, be mentioned that both the mechanical positioning and the coding functions can also be obtained if the pieces 48 are omitted, and the recesses 30 as shown in Fig. 1a are formed in the printed circuit board 38 alone.

It can, furthermore, be mentioned that the recess 30 on either side can extend all the way to the front 14 or rear edge 16 which will also provide the described functions. In such an embodiment, the width of the printed circuit board 38 and, therefore, the width of the functional module 10 as a whole, will be reduced over the entire distance from the recess 30 to the front 14 or the rear edge 16. In this context, the width of the printed circuit board 38 is the dimension in the direction of arrow B. As can easily be understood from Fig. 1a, the telecommunications module (not shown in Fig. 1a), to which the functional module 10 is fittable, will comprise a suitable projecting and/or stepped contour, which is at least partially complementary to the contours of recesses 30 and the additional pieces 48 of the functional module 10. In this manner there is suitable interaction, when the functional module is fitted to the telecommunications module so as to appropriately position the module. In addition, only a functional module 10, which comprises suitable recessed and/or stepped contours, will be fittable to a telecommunications module so as to reduce the likelihood of malfunctions.

Fig. 1b shows an alternative contact area 24 for the functional module of Fig. 1a. In this case, the edges of at least some contacts 40 do not extend perpendicular to the insertion direction B. Thus, a kind of "ramp" or "wedge" is formed, and the riding of the contacts of the telecommunications module over the respective edges of the contacts 40 of the functional module 10 can be facilitated. Thus, it will require a lesser force to insert the functional module. In the embodiment shown, the angled edges have an angle of approximately 10° with regard to the direction perpendicular to the insertion direction B. Moreover, in the case shown, the distances d between the center lines of the contacts are constant. They can, however, also differ from each other.

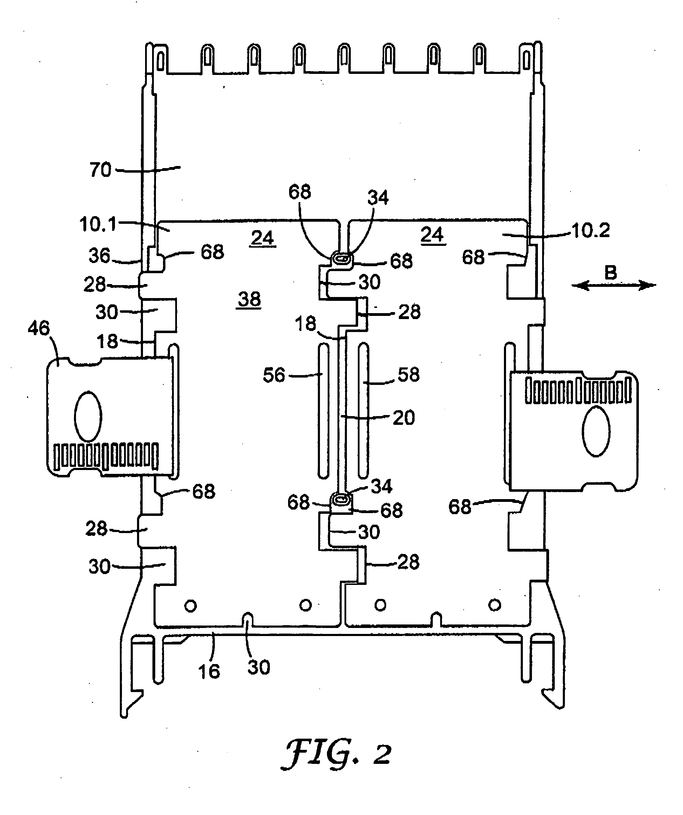

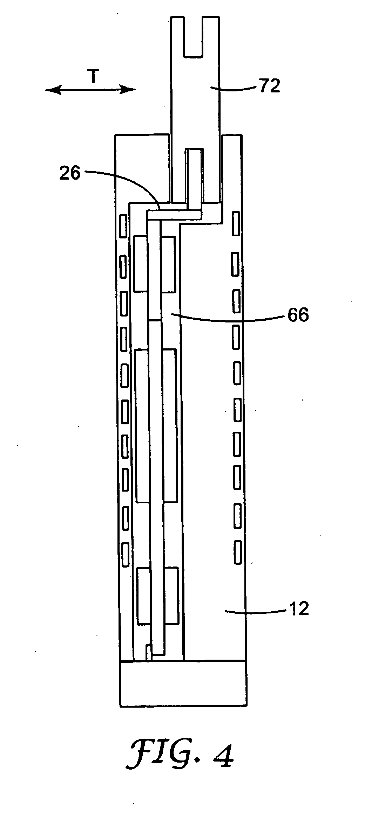

Fig. 2 shows, in a plane view, a part 70 of a telecommunications module, to which two functional modules 10 are fitted. In particular, the functional modules 10 are insertable into an inner cavity of a telecommunications module from either side thereof in the direction of arrow B. In the shown, fitted state, they are accommodated in an inner cavity of the telecommunications module, which is defined by that part 70, which is visible in Fig. 2, and a second part, which has been removed in Fig. 2, in order to allow the functional modules 10 to be viewed. However, the removed part will have dimensions which are at least similar to that part 70 of the telecommunications module, which is shown in Fig. 2 and would cover the functional modules. As regards any details of the telecommunications module, reference can be made to the above referenced documents. Moreover, the part 70 of the telecommunications module, which is visible in Fig. 2, can be the wire guide plate disclosed in the Applicant's EP 05 000 346.6 filed January 10, 2005. In particular, any details regarding the wire guide plate as well as the assembly and the telecommunications module comprising at least one wire guide plate, as described in the mentioned application, can be combined with the functional module described herein. Moreover, the functional module described herein can be combined with any known telecommunications module or wire guide thereof, for example with the module described in WO 03/61303. The general structure of the entire assembly including two wire guide plates bordering the functional module will also be apparent from Fig. 4. In particular, the module 72 at the top of Fig. 4 can be the disconnection module described in the aforementioned application, or any other suitable module.

Also the second embodiment of the functional module 10 shown in Fig. 2 comprises various projections 28 and recesses 30 formed on the left 18 and right edge 20 of the telecommunications module. In particular, in the embodiment shown, on each edge 18, 20, a structure comprising a projection 28 adjacent a recess 30 is formed both in front of and rearward from the flexible handle 46. In particular, the projections 28 formed in front of and rearward from the flexible handle can be used to apply pressure thereto by two fingers, such as the thumb and the index finger, when the functional module is inserted in direction B. The functional module comprises its "normal" width, as defined by edges 18, 20 in the surroundings of the flexible handles 46 as well as in the contact area 24 and adjacent the rear edge. 16. In the case shown, all edges of projections 28 and recesses 30 are formed approximately perpendicular to the edges 18, 20. They can, however, also form an angle therewith. In the embodiment shown, the part 70 of the telecommunications module comprises two stops 34 in approximately the center, which define the position of both functional modules 10 in the direction B and are accommodated in rounded cutouts or recesses 68 of the printed circuit board 38. In particular, the shape of the printed circuit board 38 of the functional module, which again acts as a kind of carrier, and the position of the stops 34 cooperate so as to achieve a position of the functional module 10, in which the outer edge, i.e. the left edge of the left functional module 10.1, which is constituted by the left edge of the projections 28, is, in the embodiment shown, flush with the outer edge 36 of the telecommunications module. The same applies to the right functional module 10.2 and its right edge 20. It should in this context be mentioned that the outer edges with the embodiments of Fig. 1 as well as 3 to 5 can be flush with the edges of the telecommunications module, but do not necessarily have to be provided in this manner.

Although this is not shown in the drawings, both the left 10.1 and right functional module 10.2 will additionally comprise a flexible handle 46, as shown on the left side for the left functional module 10.1 and the right side for the right functional module 10.2, on the respective "other" side. Thus, the left functional module 10.1 will comprise a flexible handle, which is attached to slit 56 near the right edge 20. In a similar manner, a flexible handle 46 will be attached to the slit 58 near the left edge 18 of the right functional module 10.2. The slits 56, 58 extend approximately parallel to the edges 18, 20. With the additional flexible handles, which are not shown in the drawing, two identical functional modules 10 are accommodated in the telecommunications module. This provides significant advantages, as the manufacturer of the functional modules 10 does not have to provide specific "left" and "right" functional modules. Furthermore, any individuals, who have the job of fitting the functional modules to a telecommunications module, do not have to worry about the proper functional modules being inserted from a specific side.

Advantageously, the left 18 and the right edge 20 of the functional module 10 are formed complementary. This implies that, as can be taken from the center of the drawing, the projections 28 are formed rearwards of the recesses 30 at the right edge 20, whereas the recesses 30 are formed rearwards from the projections 28 at the left edge 18. Thus, the projections 28 of the left functional module 10.1 can be accommodated in the recesses 30 of the right functional module 10.2 and vice versa.

In particular, the total width, as seen in the direction B, of one functional module 10 including any projections 28, is greater than half of the width of the telecommunications module. This implies that the projections 28 at least partially extend into the area, where the second functional module is to be accommodated. Thus, only when the second functional module comprises one or more recesses complementary to the projections 28 extending into "its" half, the functional module can be fitted to the telecommunications module. Any other functional module lacking the appropriate recesses will not be fittable thereto, so that it can be realized that the use of incorrect functional modules will reliably be prevented. In these considerations regarding the width, the flexible handles 46 are not considered, as these are flexible and do not constitute a rigid projection in the sense of the present disclosure, and, therefore, do not contribute to the function of mechanically positioning the functional module and/or providing a coding.

The embodiment shown in Fig. 2 further comprises a recess 30 formed on the rear edge 16. This recess cooperates with a suitable projection (not shown), which is provided on the telecommunications module. This projection will engage with the recess 30, when the functional module 10 is in the correct position. In particular, during the movement of the functional module 10 in the insertion direction B, the rear edge 16 will move along this projection. When the recess 30 reaches the position of the projection, the projection will be accommodated in the recess 30 and will engage therewith, which can be sensed by the individual inserting the functional module. This can, possibly in connection with a "click"-sound, provide an advantageous feedback that the correct position is reached.

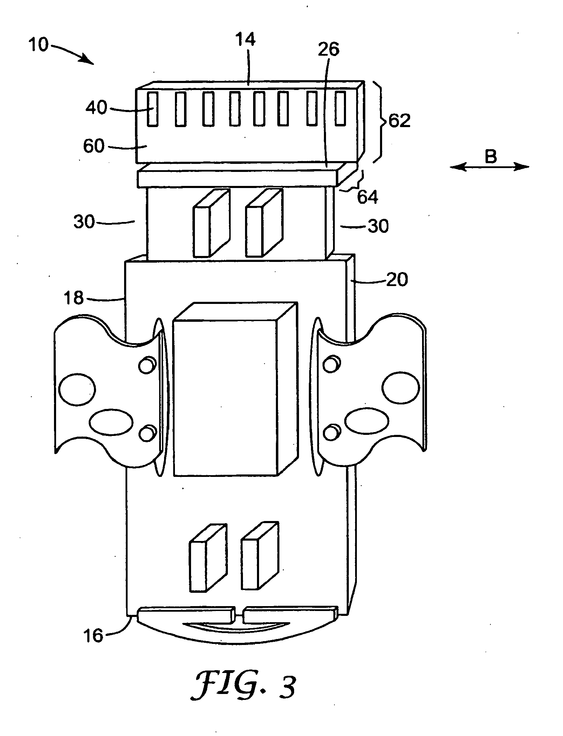

The embodiment shown in Fig. 3 is somewhat similar to the embodiment of Fig. 1a, so that merely the differing parts will be described. Unlike in the embodiment of Fig. 1a, the contacts 40 have a uniform width. In this embodiment, there is, firstly, a recess 30 formed similar to the recess 30 shown in Fig. 1a. Secondly, a step 26 is formed in a thickness direction, i.e. perpendicular to the surface of a carrier 60. In the embodiment shown, the carrier 60 is formed as a molded interconnected device (MID), usually made of plastic. A first section 62 carrying the contacts 40 is formed relatively flat and extending in the front-rear direction (see the front edge 14 and the rear edge 16). A second section 64 essentially extends in a thickness direction, i.e. substantially perpendicular to the main surface of the first section 62. The second section 64 is somewhat narrower than the first section 62, so that the recess 30 has a first depth, i.e. an extension in the direction of arrow B in this section. Adjacent the second section 64, the remainder of the carrier 60 is formed relatively flat and extending in the front-rear direction.
In the area adjacent the second section 64, the recess 30 is formed on each edge 18 with a greater depth than in the area of the second section 64.

As can additionally be taken from Fig. 4, a three-dimensional coding is provided by the cooperation of the recesses 30 formed in the insertion direction B, and the step 26 formed in the thickness direction T (see Fig. 4). In particular, the telecommunications module 12, as can be seen in Fig. 4, comprises substantially complementary structures, which cooperate with the step 26, in order to position the functional module 10 appropriately. Moreover, the inner cavity 66 of the telecommunications module 12 is adapted to accommodate only those functional modules, which comprise the step 26 in the appropriate position and with the appropriate size.

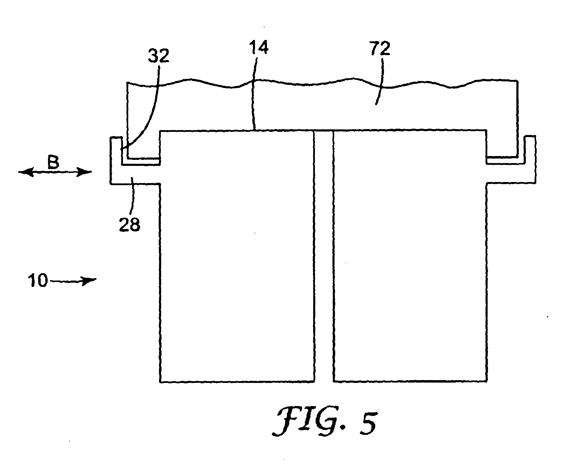

Finally, Fig. 5 schematically shows an embodiment of the functional module 10, which comprises an undercut 32, which is, in the embodiment shown, formed on a projection 28 of the functional module. The undercut 32 serves as a stop, when the functional module 10 is inserted into the telecommunications module 12, of which only a disconnection module 72 is shown, in the direction of arrow B. In particular, as cannot be seen in the plan view of Fig. 5, the undercut will be formed at a different level with regard to a direction perpendicular to the plane of the drawing of Fig. 5 and the edge 14 of the functional module. This is because the edge 14 has to be insertable into the telecommunications module, and the undercut should, at the same time, be capable of performing the function of a stop. As an alternative, which is not shown, the undercut 32 could be formed at a location in front the front edge 14.

The present invention has now been described with reference to several embodiments thereof. The foregoing detailed description and embodiments have been given for clarity of understanding only. No unnecessary limitations are to be understood therefrom. For example, all references to right, left, front and rear are exemplary only and do not limit the claimed invention. Moreover, any of the above-mentioned features of the functional module, in particular regarding the outer edges thereof, can be combined with each other and are to be understood as features contributing to the present invention. It will be apparent to those skilled in the art that many changes can be made in the embodiments described without departing from the scope of the invention.

## Claims

1. A functional module (10) in the field of telecommunications, which is fittable to a telecommunications module (12) and comprises outer edges (14, 16, 18, 20), corners (22) and an accessible contact area (24), at least one rigid step (26), projection (28) and/or recess (30, 68) being formed on at least one outer edge (18, 20) in an area other than the contact area (24) and at a distance from a corner (22) to cooperate with at least partially complementary structures, **characterized in that** at least one outer edge, on which is formed the at least one rigid step (26), projection (28) and/or recess (30, 68) , is oriented with an angle of substantially 90° relative to an edge (14) in the vicinity of the contact area (24) and **in that** the functional module is inserted into the telecommunication module in a direction, which is substantially parallel to the edge, where the contact area is provided.

2. The functional module in accordance with claim 1, wherein both at least one projection (28) and at least one recess (30, 68) are formed on at least one outer edge (18, 20).

3. The functional module in accordance with any of the preceding claims, wherein at least two opposite outer edges (18, 20) are at least partially formed complementary to each other.

4. The functional module in accordance with any of the preceding claims, wherein the projections (28) and/or recess (30) are formed with a varying projecting/recessed dimension.

5. The functional module in accordance with any of the preceding claims, wherein at least one undercut (32) serving as a stop is formed at at least one outer edge (20).

6. The functional module in accordance with any of the preceding claims, wherein the functional module (10) has a generally flat structure with a thickness dimension (T), at least one step (26), projection and/or recess being formed in at least one outer edge (18, 20) in the thickness direction (T).

7. The functional module in accordance with any of the preceding claims, wherein the functional module comprises at least one printed circuit board (38), on the outer edges (18, 20) of which at least one of the projections (28) and/or recesses (30, 68) is formed.

8. The functional module in accordance with any of the preceding claims, further comprising at least one splitter circuit and/or at least one protection component and/or at least one testing or monitoring circuit and/or at least one connector.

9. The functional module in accordance with any of-the preceding claims, further comprising more than one contact with a width extending substantially in an insertion direction (B), wherein at least two contacts (40) have a differing width.

10. The functional module in accordance with any of the preceding claims, further comprising more than two contacts (40) with distances between the contacts extending substantially in an insertion direction (B), wherein at least two distances are different from each other.

11. An assembly of at least one telecommunications module (12) and at least one functional module (10) in accordance with any of the preceding claims.

12. The assembly in accordance with claim 11, wherein at least one inner cavity (66) is formed in the telecommunications module (12), into which the functional module (10) is insertable.

13. The assembly in accordance with claim 11 or 12, wherein the telecommunications module (12) comprises at least one stop (34) for positioning at least one functional module (10).

14. The assembly in accordance with one of claims 11 to 13, wherein a width of the functional module (10) including any rigid projections (28) formed thereon is greater than half of the width of the telecommunications module (12).

15. The assembly in accordance with one of claims 11 to 14, wherein the telecommunications module (12) comprises more than one contact with a width thereof extending in an insertion direction (B) of the functional module (10), at least two contacts of the telecommunications module (12) having a differing width.

## Patentansprüche

1. Funktionsmodul (10) im Telekommunikationsgebiet, das an ein Telekommunikationsmodul (12) anbringbar ist und Außenkanten (14, 16, 18, 20), Ecken (22) und einen zugänglichen Kontaktbereich (24) umfasst, wobei mindestens eine steife Stufe (26), ein Vorsprung (28) und/oder eine Vertiefung (30, 68) auf mindestens einer Außenkante (18, 20) in einem anderen Bereich als dem Kontaktbereich (24) und beabstandet von einer Ecke (22) ausgebildet ist/sind, um mit mindestens teilweise komplementären Strukturen zusammenzuwirken, **dadurch gekennzeichnet, dass** mindestens eine Außenkante, auf der die mindestens eine steife Stufe (26), der Vorsprung (28) und/oder die Vertiefung (30, 68) ausgebildet ist/sind, mit einem Winkel von im Wesentlichen 90° relativ zu einer Kante (14) in der Nähe des Kontaktbereichs (24) orientiert ist und dass das Funktionsmodul in einer Richtung, die im Wesentlichen parallel zu der Kante verläuft, wo der Kontaktbereich vorgesehen ist, in das Telekommunikationsmodul eingesetzt ist.

2. Funktionsmodul nach Anspruch 1, wobei sowohl mindestens ein Vorsprung (28) und mindestens eine Vertiefung (30, 68) auf mindestens einer Außenkante (18, 20) ausgebildet sind.

3. Funktionsmodul nach einem der vorhergehenden Ansprüche, wobei mindestens zwei gegenüberliegende Außenkanten (18, 20) mindestens teilweise zueinander komplementär ausgebildet sind.

4. Funktionsmodul nach einem der vorhergehenden Ansprüche, wobei die Vorsprünge (28) und/oder Vertiefung (30) mit unterschiedlicher Vorsprungsdimension oder Vertiefungsdimension ausgebildet sind.

5. Funktionsmodul nach einem der vorhergehenden Ansprüche, wobei mindestens ein Hinterschnitt (32), der als Anschlag dient, mindestens an einer Außenkante (20) ausgebildet ist.

6. Funktionsmodul nach einem der vorhergehenden Ansprüche, wobei das Funktionsmodul (10) eine im Allgemeinen flache Struktur aufweist mit einer Dickendimension (T), wobei mindestens eine Stufe (26), ein Vorsprung und/oder eine Vertiefung in mindestens einer Außenkante (18, 20) in der Dickenrichtung (T) ausgebildet ist/sind.

7. Funktionsmodul nach einem der vorhergehenden Ansprüche, wobei das Funktionsmodul mindestens eine gedruckte Leiterplatte (38) umfasst, an deren Außenkanten (18, 20) mindestens eine(r) der Vorsprünge (28) und/oder Vertiefungen (30, 68) ausgebildet sind.

8. Funktionsmodul nach einem der vorhergehenden Ansprüche, ferner umfassend mindestens eine Teilerschaltung und/oder mindestens ein Schutzbauteil und/oder mindestens eine Test- oder Überwachungsschaltung und/oder mindestens einen Anschluss.

9. Funktionsmodul nach einem der vorhergehenden Ansprüche, ferner umfassend mehr als einen Kontakt mit einer Breite, die im Wesentlichen in einer Einsetzrichtung (B) verläuft, wobei mindestens zwei Kontakte (40) eine unterschiedliche Breite aufweisen.

10. Funktionsmodul nach einem der vorhergehenden Ansprüche, ferner umfassend mehr als zwei Kontakte (40) mit Abständen zwischen den Kontakten, die im Wesentlichen in einer Einsetzrichtung (B) verlaufen, wobei sich mindestens zwei Abstände voneinander unterscheiden.

11. Anordnung aus mindestens einem Telekommunikationsmodul (12) und mindestens einem Funktionsmodul (10) nach einem der vorhergehenden Ansprüche.

12. Anordnung nach Anspruch 11, wobei mindestens ein Innenhohlraum (66) in dem Telekommunikationsmodul (12) ausgebildet ist, in den das Funktionsmodul (10) einsetzbar ist.

13. Anordnung nach Anspruch 11 oder 12, wobei das Telekommunikationsmodul (12) mindestens einen Anschlag (34) zum Positionieren des mindestens einen Funktionsmoduls (10) umfasst.

14. Anordnung nach einem der Ansprüche 11 bis 13, wobei eine Breite des Funktionsmoduls (10) einschließlich eventuell daran ausgebildeter steifer Vorsprünge (28) mehr als die halbe Breite des Telekommunikationsmoduls (12) beträgt.

15. Anordnung nach einem der Ansprüche 11 bis 14, wobei das Telekommunikationsmodul (12) mehr als einen Kontakt umfasst, deren Breite sich in einer Einsetzrichtung (B) des Funktionsmoduls (10) erstreckt, wobei mindestens zwei Kontakte des Telekommunikationsmoduls (12) eine unterschiedliche Breite aufweisen.

## Revendications

1. Module fonctionnel (10) dans le domaine des télécommunications, pouvant être monté sur un module (12) de télécommunications et comportant des bords extérieurs (14, 16, 18, 20), des coins (22) et une zone (24) de contacts accessible, au moins une marche rigide (26), une protubérance (28) et / ou un renfoncement (30, 68) étant formés sur au moins un bord extérieur (18, 20) dans une zone autre que la zone (24) de contacts et à une certaine distance d'un coin (22) en vue de coopérer avec des structures au moins partiellement complémentaires, **caractérisé en ce qu'**au moins un bord extérieur, sur lequel sont formés la ou les marches rigides (26), la ou les protubérances (28) et / ou le ou les renfoncements (30, 68), est orienté suivant un angle valant sensiblement 90° par rapport à un bord (14) situé au voisinage de la zone (24) de contacts et **en ce que** le module fonctionnel est inséré dans le module de télécommunication dans une direction sensiblement parallèle au bord où est ménagée la zone de contacts.

2. Module fonctionnel selon la revendication 1, à la fois une ou plusieurs protubérances (28) et un ou plusieurs renfoncements (30, 68) étant formés sur au moins un bord extérieur (18, 20).

3. Module fonctionnel selon l'une quelconque des revendications précédentes, au moins deux bords extérieurs (18, 20) opposés étant au moins partiellement formés de façon à être complémentaires l'un de l'autre.

4. Module fonctionnel selon l'une quelconque des revendications précédentes, les protubérances (28) et / ou le renfoncement (30) étant formés avec une dimension saillante / rentrante variable.

5. Module fonctionnel selon l'une quelconque des revendications précédentes, au moins une encoche (32) servant de butée étant formée au niveau d'au moins un bord extérieur (20).

6. Module fonctionnel selon l'une quelconque des revendications précédentes, le module fonctionnel (10) présentant une structure généralement plate et une dimension (T) en épaisseur, au moins une marche (26), une protubérance ou un renfoncement étant formé(e) dans au moins un bord extérieur (18, 20) dans le sens de l'épaisseur (T).

7. Module fonctionnel selon l'une quelconque des revendications précédentes, le module fonctionnel comportant au moins une carte (38) à circuit imprimé, sur les bords extérieurs (18, 20) de laquelle est formé(e) au moins un(e) des protubérances (28) et / ou renfoncements (30, 68).

8. Module fonctionnel selon l'une quelconque des revendications précédentes, le module fonctionnel comportant en outre au moins un circuit répartiteur et / ou au moins un composant de protection et / ou au moins un circuit de test ou de surveillance et / ou au moins un connecteur.

9. Module fonctionnel selon l'une quelconque des revendications précédentes, comportant en outre plusieurs contacts d'une largeur s'étendant sensiblement dans une direction (B) d'insertion, au moins deux contacts (40) étant de largeurs différentes.

10. Module fonctionnel selon l'une quelconque des revendications précédentes, comportant en outre plus de deux contacts (40) séparés par des distances s'étendant sensiblement dans une direction (B) d'insertion, au moins deux distances étant différentes l'une de l'autre.

11. Ensemble comprenant au moins un module (12) de télécommunications et au moins un module fonctionnel (10) selon l'une quelconque des revendications précédentes.

12. Ensemble selon la revendication 11, au moins une cavité intérieure (66), dans laquelle le module fonctionnel (10) peut être inséré, étant formée dans le module (12) de télécommunications.

13. Ensemble selon la revendication 11 ou 12, le module (12) de télécommunications comportant au moins une butée (34) servant à positionner au moins un module fonctionnel (10).

14. Ensemble selon l'une des revendications 11 à 13, une largeur du module fonctionnel (10), incluant d'éventuelles protubérances rigides (28) formées sur celui-ci étant supérieure à la moitié de la largeur du module (12) de télécommunications.

15. Ensemble selon l'une des revendications 11 à 14, le module (12) de télécommunications comportant plusieurs contacts dont la largeur s'étend dans une direction (B) d'insertion du module fonctionnel (10), au moins deux contacts du module (12) de télécommunications étant de largeurs différentes.
